# EUROPEAN PATENT SPECIFICATION

(11) **EP 2 792 984 B1**
(45) Date of publication and mention of the grant of the patent: **10.03.2021**
(21) Application number: 13425056.2
(22) Date of filing: 17.04.2013
(51) Int. Cl.: F27B 3/08, C21C 5/56, F27B 3/18, F27D 13/00, F27D 3/00, C22B 1/14

(54) **Method for preparing and feeding metal scrap to an electric smelting furnace for making steel**
Verfahren zur Herstellung und Zuführung von Metallschrott an einen elektrischen Schmelzofen zur Herstellung von Stahl
Procédé de préparation et d'alimentation de déchets métalliques dans un four de fusion électrique pour la production d'acier

(43) Date of publication of application: 22.10.2014
(73) Proprietor: GOTTARDO SRL, 24060 Sovere (BG) (IT)
(72) Inventor: Capodilupo, Domenico, 05100 Terni (IT); Schliephake, Henning Herbert Robert, 49078 Osnabrück (DE)
(74) Representative: Modiano, Micaela Nadia

(56) References cited:
- EP-A2- 1 689 893
- WO-A1-2006/111579
- DE-A1- 2 057 068
- DE-A1-102008 060 774
- FR-A3- 2 681 937
- GB-A- 2 493 493
- US-A- 3 577 912
- US-A- 4 103 610

## Description

The present invention relates to a method for preparing and feeding metal scrap to an electric smelting furnace for making steel.

In the production of steel starting from steel scrap, various methods are known which provide for preheating the scrap before it is introduced in the electric smelting furnace.

The methods used predominantly to preheat the scrap are aimed at using, as an almost exclusive or main source, the enthalpy contained in the hot exhaust gases released by the electric smelting furnace. Any additional energy is supplied by means of fuel burners. The various production methods that provide for preheating of the scrap differ in particular in the methods for loading the scrap into the electric smelting furnace. Said methods can be summarized as follows:
- batch loading method (discontinuous);
- continuous loading method;
- shaft loading method (based on the use of a vat-like container, known as a shaft, connected to the electric smelting furnace);
- offline preheating of the scrap.

Batch loading methods, i.e., discontinuous loading methods, are described in US 3 645 516, US 4 373 911, US 4 375 958, US 4 470 804, US 4 478 574, US 4 559 629, US 5 000 425 and EP 0 268 606 B1.

In US 3 645 516, scrap preheating is achieved by introducing, in baskets that contain the scrap, hot gas produced by burning coal.

In US 4 373 911, the scrap is introduced into the loading basket, which in turn is contained within a sealed pit. The hot gas is induced to flow upward from below.

US 4 375 958 illustrates a variation of the methods cited above.

In US 4 470 804, the scrap is always contained within one or more containers and is crossed by gases preheated beforehand in adapted combustion chambers.

In US 4 478 574, energy is supplied to the scrap again by the spent gas of the electric smelting furnace, which is partially diverted and subsequently integrated with gas that arrives from a combustion chamber.

US 4 559 629 describes a system that is similar to the one described by US 4 478 574.

US 5 000 425 and EP 0 268 606 describe a method for preheating the scrap inside the baskets by means of the exhaust gas of the electric smelting furnace. Only these last two patents deal with the possible forming of dioxins/furans.

Batch loading methods have some problems.

One of these problems is the production of dust. These methods generate 10 ÷ 30 kg of dust at the filters for every ton of processed scrap.

Another problem is constituted by the forming of dioxins and furans that occurs substantially when the scrap is in the temperature range of 250°C ÷ 450°C. These substances emerge from the scrap together with the other gases that form during its heating. Their generation is facilitated by the presence of precursors such as oils, compounds containing chlorine and in the presence of catalysts, such as for example divalent iron Fe⁺². All these elements can be present in the electric smelting furnace or in the exhaust gases generated thereby. For their thermal destruction, European Directive 2000/76/EC requires the retention, for at least 2 seconds, of the hot gases at a temperature that is higher than or equal to 850°C or 1100°C. This prescription cannot be met with the batch loading methods currently in use. The problem is dealt with by means of very fast exhaust gas cooling units (known as quenchers) or by injecting activated charcoals. Both methods have significant costs, especially if they are applied to very large gas volumes, as indeed occurs in batch loading methods.

Another problem that can be observed with batch loading methods is the phenomenon of flicker, which causes disturbances in the electrical grid that supplies the electric smelting furnace. The scrap is smelted mainly thanks to the radiation of the electric arcs, with a consequent unevenness in the smelting and with problems of wear of the refractory material that lines the internal walls of the electric smelting furnace in the hot spots of the walls that are closest to the electrodes. Radiation is highly variable in relation to the discontinuities of the scrap, with consequent rapid variations in the electrical voltage at frequencies between 0.5 and 40 Hz. This phenomenon, known indeed as flicker, generates significant disturbances on the grid. For this reason, electric steelworks are required by the power supplier to insert systems suitable to contain this phenomenon, for example by means of the insertion of reactors that can be saturated.

The insertion of said systems entails a partial reduction of the available electric power.

Another problem that can be observed in batch loading methods is noise. The voltage variations cited above are also an additional source of instability of the electric arc, which manifests itself by the emission of noise which, in many cases, exceeds 120 dBA.

Moreover, with batch loading methods there is no possibility of performing a preliminary separation and any recovery of low-melting non-volatile metals and substances, which can be dissolved in the liquid steel, reducing its quality, such as for example lead and tin compounds.

Continuous loading methods are described in US 3 789 126, US 5 400 358, US 6 155 333, EP 0 744 585 B1, US 5 647 288 and WO2011/091685A1.

In US 3 789 126, the scrap is heated in countercurrent by the hot gases that exit from the electric smelting furnace within a tunnel.

The advancement of the scrap toward the electric smelting furnace is achieved by the rotation of the entire tunnel about its own axis.

US 5 400 358, US 6 155 333, EP 0 744 585 B1 and US 5 647 288 all provide for preheating the scrap in countercurrent with the hot gases that exit from the electric smelting furnace and the advancement of the scrap, arranged inside a tunnel, is obtained with an oscillating motion at variable speed of the lower part of the tunnel itself.

In WO2011/091685A1, the tunnel that contains the scrap has an inclined bottom with steps.

Continuous loading methods unquestionably have some advantages, including a reduction in the consumption of electric power, in heat losses, in idle times and in disturbances of the electrical grid. The preheating of the scrap is achieved by using the enthalpy from the hot exhaust gases conveyed in a tunnel that is connected to the electric smelting furnace. In practice, the tunnel replaces the classic fourth hole arranged on the roof of the electric smelting furnace. The hot gas travels through the entire tunnel and exits from the opposite side after transferring part of its enthalpy to the underlying advancing scrap.

Another advantage achieved by continuous loading is the overcoming of the problem of flicker, since the electric arc acts constantly on a level bath that does not cause conductivity disturbances. Additional advantages are lower noise and operation always in the presence of foamy slag. The scrap is smelted by the steel that is already liquid and not by radiation. The smelting of the scrap is accelerated and more efficient because of this.

A further advantage of continuous loading is the lower production of dust at the filter (approximately 6 kg for every ton of scrap against 10 ÷ 30 kg/t of batch loading).

However, the dust, mainly metallic oxides, that does not reach the filters reenters the electric smelting furnace, increases the slag volume and generates an extra consumption of electric power. The environmental advantage is minimal. In this manner, the cost of transferring the waste to a landfill (slag instead of dust) is lower, but the cost of the extra consumption of electric power is higher.

In contrast to these advantages, continuous loading in turn has some problems.

With very few exceptions, the application of the continuous loading method in fact requires substantial modifications to the layout and infrastructures of existing facilities, thus making its installation almost prohibitive from an economic standpoint. Not coincidentally, almost all installations have been provided as part of so-called greenfield projects and therefore predominantly in developing countries.

Another problem of continuous loading is the interdependency of the components of the system. In systems with continuous loading, the tunnel is in fact dedicated first of all to scrap conveyance and simultaneously but subordinately to scrap preheating. The tunnel is integral with the electric smelting furnace. These systems require very significant superstructures which modify the layout of the steelworks and the mechanical aspects of the electric smelting furnace.

Another problem that can be observed in known continuous loading methods is limited efficiency in scrap heating, since the hot gases are able to affect only the surface layer of the scrap. The reduced contact time between hot gas and scrap and the reduced retention time of the scrap in the tunnel, proportionate to the feed rate of the electric smelting furnace, are a considerable limitation. During power-off time, the gases do not affect the scrap. The average temperature of the gases in output from the tunnel is above 1000°C and the gases still contain significant quantities of CO. Therefore, the spent gas still has a high enthalpy. Accordingly, preheating of the scrap is certainly limited.

In some continuous loading solutions, integrating systems have been added in order to increase heating efficiency, for example burners, oxygen lances, afterburners, but the improvement has turned out to be marginal.

A further problem of known continuous loading methods is the fact that prescriptions regarding the thermal destruction of dioxins and furans and their recombination, in accordance with European Directive 2000/76/EC, cannot be met. The systems that use these continuous loading methods require additional systems for the suppression of these substances, with consequent additional costs.

Moreover, with the continuous loading methods currently in use, the non-volatile low-melting metals are conveyed by the tunnel into the steel bath, lowering its quality, such as for example compounds of lead and tin.

Yet another problem inherent in known continuous loading methods is the fact that they use the exhaust gases of the electric smelting furnace, which are notoriously oxidizing, to preheat the scrap.

Therefore, these methods are not suitable for high-alloy or stainless scrap, since surface oxidation would generate an unacceptable loss of chromium (by oxidation to chromite) and a great obstacle to the solubilization of the scrap.

The shaft loading method (vat-like containers separated by one or more stages arranged at the top of the electric smelting furnace) is described in US 5 375 139, JP 9 243 275 A, US 4 740 989, US 6 024 912, EP 0 268 606 B1, WO 2012/038320 A1.

In this method, the scrap is arranged in a container (shaft) that is connected directly to the electric smelting furnace and is arranged above a portion of the roof of said furnace, or at the edge of the furnace, or in containers that constitute an integral part of the furnace but are arranged in a peripheral and separate section.

Scrap preheating is obtained by using as the primary energy source the enthalpy from the hot exhaust gases generated in the electric smelting furnace.

The shaft loading method has the great advantage, with respect to traditional methods that provide for introducing in the electric smelting furnace cold scrap by means of baskets, of being able to reduce electric power consumption, reducing heat losses, reducing downtimes and partially reducing disturbances of the electrical grid.

The shaft loading method, with electric smelting furnaces that operate constantly with a liquid steel bath, has the advantage of overcoming the problem of flicker, since the electric arc acts constantly on a level bath which does not cause conductivity disturbances.

Further advantages of this method are lower noise and the possibility of operating always in the presence of foamy slag. The scrap is smelted mostly by convection by the liquid steel and not by radiation. This form of smelting is faster and more efficient.

Another advantage of the shaft loading method is the fact of having a smaller amount of dust at the filter. However, the dust, constituted mainly by metallic oxides, that does not reach the filters remains in the scrap and returns to the electric smelting furnace, increases the slag volume and generates an additional consumption of electric power. The environmental advantage is minimal. The cost of transfer of the waste to a landfill is lower (slag instead of dust), but the cost of the additional electric power consumption is higher.

A further advantage of the shaft loading method is the good heating capacity of the scrap. The hot gases affect all the scrap contained in the shaft, but the contact time of the hot gas with the scrap remains, in this case also, limited. Moreover, during power-off times the gases do not affect the scrap.

In contrast to these advantages, the shaft loading method also has some problems.

One of these problems is the fact that this method requires, with very rare exceptions, substantial modifications to the layout and to the infrastructures of existing systems, making its installation economically almost prohibitive from an economic standpoint. Not coincidentally, almost all installations have been provided as part of greenfield projects and therefore predominantly in developing countries.

Another problem is the subsystems, which are important, expensive and most of all a high maintenance burden.

Moreover, due to the fact that the equipment required to perform the shaft loading method is closely integrated with the electric smelting furnace, very significant superstructures are required which modify substantially both the layout of the steelworks and the very structure of the electric smelting furnace.

A further problem that can be observed in shaft loading methods currently in use is the need to reduce the emission of dioxins. In some systems, burners have been added in order to raise the temperature of the output gases with the function of an active afterburner chamber, so as to comply with European Directive 2000/76/EC. The installation and operating costs of this solution are substantial.

Yet another problem, shared with continuous loading methods, is the fact that the exhaust gases of the electric smelting furnace, which are notoriously oxidizing, are used to preheat the scrap. Therefore these methods cannot be used for stainless or high-alloy scrap.

Moreover, with the shaft loading methods currently in use, volatile low-melting metals, such as for example compounds of zinc and chlorides, are not "separated" significantly and the non-volatile metals, such as for example tin and lead compounds, cannot be recovered and therefore dissolve in the liquid steel, reducing its quality.

A further problem of the shaft methods currently in use is the fact that the apparatus used to preheat the scrap limits the tilting of the electric smelting furnace. In some systems, which use the shaft loading method, since it is possible to tilt the electric smelting furnace only by a few degrees, it has been necessary to introduce a particular tapping system known as a siphon, with higher costs and maintenance.

One example of off-line scrap preheating method is described in EP 1 279 914 A1, which provides for heating, at a high temperature, scrap that is dissolved by means of a gas that is superheated by dedicated burners in an adapted combustion chamber. The scrap is contained in a specific vessel, which is removed periodically from the line and can act as a means for transporting and loading the scrap into the smelting furnace.

FR2681937 discloses a device for continuously loading ferromagnetic metal products into a metallurgical furnace, comprising a conveyor belt that feeds the metal products to a pipeline emerging into a furnace through an orifice pierced in the roof closing the furnace at its upper part. At least one electromagnet which can be activated and deactivated is located on the wall of the the pipe outside the latter, for controlling the feed of the metal products in the pipeline and for preheating them using the fumes produced in the furnace that exit the orifice into the pipeline.

US3577912 discloses a horizontal press for forming compressed scrap metal briquettes that may be charged to electric furnace crucibles. Scrap metal is introduced into an elongated casing having a conical shape and a concave bottom. The scrap metal is compressed through the action of a fluid actuated cylinder and piston assembly. An ejection piston having a punch with a tapered end forms an axial blind hole in the middle of the scrap briquette for aiding in preheating in the crucible so that preheating furnaces are unecessary. A method for preheating the charge to be fed to an electric arc furnace involving previous scrap briquetting and heating in a modular tunnel furnace is known from EP-A 1689893.

The aim of the present invention is to devise a method for preparing and supplying metal scrap to an electric smelting furnace for making steel that allows solving or reducing substantially the problems that can be observed in steel production processes that use steel scrap as a raw material and provide for its preheating.

Within this aim, an object of the invention is to propose a method which, in addition to allowing considerable energy savings in the production of steel with electric smelting furnaces, ensure full compliance with statutory provisions for environmental protection.

Another object of the invention is to propose a method that allows the recovery of substances that are present in the scrap, at the same time preventing said substances from contaminating the liquid steel bath, lowering its quality.

A further object of the invention is to propose a method that can be adopted not only in newly built apparatuses but also in existing apparatuses by performing economically convenient modifications.

In accordance with the invention, there is provided a method for preparing and feeding metal scrap to an electric smelting furnace for making steel, as defined in the appended claims.

Further characteristics and advantages of the invention will become more apparent from the description of a preferred but not exclusive embodiment of the method according to the invention and of an apparatus for performing it, illustrated by way of non-limiting example in the accompanying drawings, wherein:
Figure 1 is a schematic view of the method according to the invention and of the apparatus for performing it;

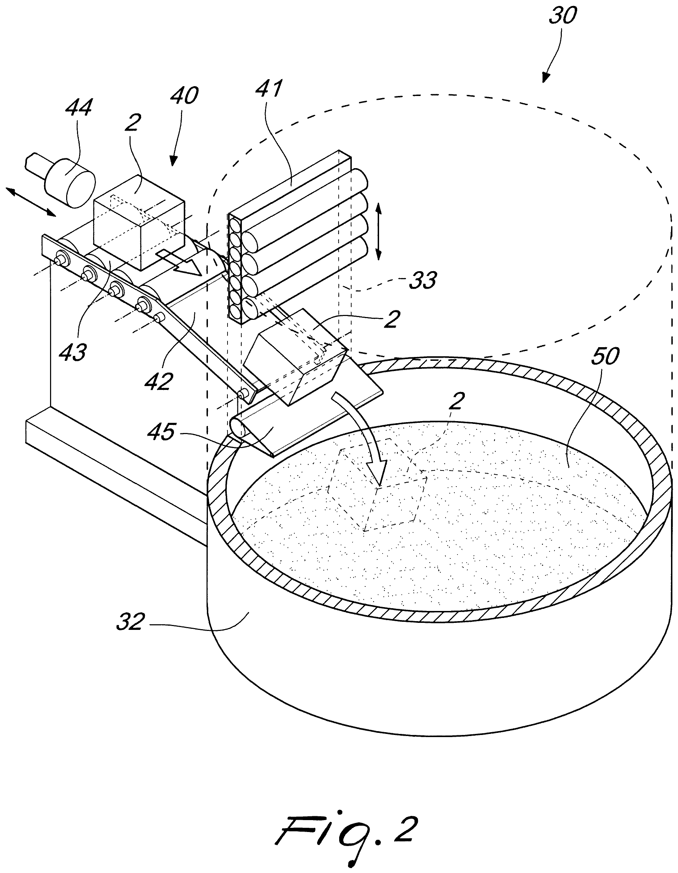

Figure 2 is an enlarged-scale view of a detail of Figure 1, showing in detail some elements not shown in Figure 1.

With reference to the figures, the method according to the invention comprises substantially:
- a step of preparing the scrap in packs 2;
- a step of preheating the packs 2 of scrap in a preheating furnace 10 that is distinct from the electric smelting furnace 30;
- a step of extracting the preheated scrap packs 2 from the preheating furnace 10 and of conveying them toward the electric smelting furnace 30;
- a step of introducing the preheated scrap packs 2 into the liquid metal bath 50 of the electric smelting furnace 30.

More particularly, the scrap that can be used with the method according to the invention can be of a commercial type and of standard dimensions.

No additional constraint is required besides the traditional "oven ready" currently used in all electric furnaces, in the form of flat, long, thin massive scrap (maximum dimensions: 1000 x 500 x 500 mm).

Off-line, the scrap is first gathered and compacted in the form of pressed packs 2 with high density, with various shapes or prismatic shape, preferably shaped like a parallelepiped or the like with the dimensions that are adequate for the intended productivity by means of compaction machines of a known type.

The weight of each pack 2 of scrap can be comprised between 0.5 t and 4.0 t, preferably in the range of 1.0-3.0 t for each pack 2, and the density of each individual pack should be between from 1.5 t/m³ to 4.0 t/m³.

With packs 2 having a preferred prismatic or better still a cubic shape, the side of each pack 2 is comprised preferably between 0.6 m and 1.2 m, and in any case each pack 2 can differ from every other pack 2.

It should be noted that the dimensions of the packs 2 cited above are merely non-limiting examples. In the continuation of the present description, exclusively for the purpose of greater clarity and simplicity in description, reference shall be made to a cubic shape of the packs 2 of scrap, each having a side with dimensions by way of example of 1.1 m with a weight of approximately 3.0 t.

The cost for preparing the scrap in packs 2 is amply compensated for by the fact that it is no longer necessary to prepare the baskets and by the following additional savings:
- transportability of the packs 2 with conventional means (i.e., with means that are not dedicated),
- increase in transported weight for each transfer (approximately +10%),
- reduction of CO₂ by increasing the efficiency of the transport trips,
- significant reduction in transport costs,
- higher rate of handling and higher safety,
- storage in smaller spaces and indoors,
- improvement in the metal yielded in the electric smelting furnace,
- drastic reduction in noise pollution.

These last two advantages will be clarified in more detail hereinafter with reference to the execution of the smelting of the packs 2 of scrap inside the electric smelting furnace 30.

The scrap in packs 2 is introduced into a dedicated preheating furnace 10, i.e., a preheating furnace that is physically distinct and is managed separately with respect to the electric smelting furnace 30.

This preheating furnace 10 has, inside it, an operating temperature that is higher than, or equal to, 1100°C, so as to perform a substantially uniform heating of the packs 2 of scrap to a temperature that is higher than, or equal to, 1050°C.

As a preheating furnace 10 for performing the method according to the invention it is possible to use, by way of non-limiting example, a walking beam or walking hearth combustion furnace, but not only, a rotating or continuous (tunnel) furnace, by way of example, being also intended.

A furnace of this type can be modified conveniently to be adapted to the specific application so as to allow the loading of packs 2 of scrap with a single loading of each pack 2 or simultaneous loading of multiple packs 2.

The preheating furnace 10 is therefore a combustion furnace that is provided with means for the advancement of the packs 2 of scrap from an inlet door 11 to an outlet door 12 along an advancement direction 15. If, as shown, the preheating furnace 10 has a rectilinear configuration, the advancement direction 15 coincides with the longitudinal axis of the preheating furnace 10.

The preheating furnace 10 is constituted preferably by a combustion furnace in which the hot gas used to preheat the packs 2 of scrap is the combustion gas produced by heat recovery or regenerative burners of the preheating furnace 10.

Moreover, the preheating furnace 10 is provided with means for supporting the packs 2 of scrap, which can be integrated with the advancement means, and said supporting means, as well as the arrangement of the packs 2 inside the preheating furnace, are such as to allow the hot gases produced by combustion to strike all the faces of each individual pack 2, including the lower face that rests on the supporting means. For this reason, as a means for supporting the packs 2 of scrap inside the preheating furnace 10 it is possible to use laminar supports or hangers, but also porous supports adapted to ensure efficient transit of the hot gases.

The means for the advancement of the packs 2 of scrap inside the preheating furnace 10 can be constituted by the advancement means usually provided in combustion furnaces of the walking beam or walking hearth type.

The cold scrap packs 2 are loaded separately in the preheating furnace 10 so as to constitute rows that are perpendicular to the advancement direction 15, or to the axis of the furnace if it is of the rectilinear type, each row being understood to be constituted by one or more packs 2 (by way of non-limiting example, two to four or six packs 2 for each row).

With a method of this kind, with each individual pack 2 having a weight of approximately 3.0 t, in the case of a preheating furnace 10 of the type known as a walking beam or walking hearth or rotating, for each loading row there is, as per the above cited example, from a minimum of 6.0 t (two packs 2) up to a maximum of 18.0 t (six packs 2).

If a furnace of the walking beam or walking hearth type is used as a preheating furnace 10, it has been estimated that the length of the preheating furnace 10, by way of non-limiting example and to which the person skilled in the art can apply the appropriate variations, as a function of the required productivity, of the transit rates, of the retention time (this being understood as the heating time and stabilization or soaking time), of the average thicknesses that constitute the pack 2, of the chosen density and weight of the pack 2, can vary from 25 m to 50 m, of course also as a function of the number of packs 2 in the preheating furnace 10 for each row (two or four or six packs 2).

The packs 2 of scrap inside the preheating furnace 10 are conveniently spaced both from the walls and from each other, in the range comprised between 0.3 and 0.8 m in accordance with the technical, production and handling requirements, also preferably in relation to the best fluid dynamics of the heating gases in order to obtain the best yield in terms of efficient heat transfer by convection and by radiation.

The preheating furnace 10 is provided with automatic doors 11, 12 both for insertion in the furnace and for extraction from the furnace, which are single or multiple and in any case independent, front or lateral, with dimensions that are suitable as a function of the size of the individual pack 2 of scrap, in addition to the spaces required for the processing, loading, furnace extraction operations and others.

As regards fluid dynamics and heating with combustion burners of the scrap in a pile, which can be likened to that of the scrap in packs, reference is made in particular to the study by K. Mandal (AISTech 2010), which shows that the speed of the hot gases through the scrap is relatively low.

The preheating furnace 10 can be installed also at a distance from the electric smelting furnace 30 and has an already established technological value, since these are thoroughly tested machines normally used for other purposes even at more extreme temperatures.

The preheating furnace 10 is complete with refractories and its main function is to heat the packs 2 of scrap, but in view of the high operating temperature (greater than or equal to 1100°C), it can subordinately perform the function of destroying thermally any noxious organic substances, such as dioxins and furans, possibly generated in the heating of the scrap, the function also being intended of avoiding their recombination, complying with the statutory provisions prescribed in European Directive 2000/76/EC.

For reasons of dual safety and environmental protection, as a completion of the system for treating the exhaust gases emitted by the preheating furnace 10, it is possible to insert optionally along the exhaust gas evacuation duct 20 a device for injecting activated charcoal 21, also of a known type, which is not described in detail for the sake of simplicity.

Conveniently, on the bottom of the preheating furnace 10 there is a channel 13 for collecting and conveying the metals and the low-melting liquid substances, such as for example compounds of zinc, tin, lead and other substances that melt at temperatures below 1100°C. The collection and conveyance channel 13 leads into a trap 14 for collecting low-melting liquid substances, which can be recovered periodically.

Essentially, inside the preheating furnace 10 the packs 2 of scrap are heated to a substantially uniform temperature of 1050°C. The packs 2, once heated to this temperature, are extracted from the preheating furnace 10 and, by conveyance means, are transferred to the vicinity of the electric smelting furnace 30.

The preheating furnace 10 makes it possible to obtain:
- full compliance with statutory provisions regarding environmental protection;
- extremely high efficiency (greater than or equal to 80%), a low environmental impact, the possibility of operating with regenerative, catalytic, ON/ON/OFF burners;
- the possibility of being supplied, by way of non-limiting example, with a broad range of combustible gases, such as COG (Coke Oven Gas), LNG (Liquefied Natural Gas), syngas (synthesis gas), butane, propane, propane-butane mix, methane, shale gas (natural gas extracted from clays), methane-shale gas mix, as a function of the availability and costs in relation to the geographical area where the production unit is installed;
- the possibility of changing the automatic adjustment of the atmosphere (oxidizing/reducing);
- the possibility of changing the temperature set points (for example 1100°C);
- uniform heating of the packs 2 of scrap to a temperature that is greater than or equal to 1050°C, with simultaneous thermal destruction of dioxins/furans (PCD and PCDF) or precursors thereof;
- sudden cooling of the spent gases (shorter than or equal to 1.5 seconds, in the temperature range of 500-250°C), conditions which are indispensable in order to ensure that said noxious gases do not reform (prevention of the "de novo synthesis" forming mechanism);
- exhaust gases evacuated at a temperature lower than or equal to 175°C;
- the possibility of recovering dust with a high content of the ZnO (greater than or equal to 80%), captured by means of a dedicated device 22 for filtering the exhaust gases evacuated from the preheating furnace 10, for example a dry filtration system;
- the possibility of collecting metals and any other low-melting substances that percolate from the packs of scrap 2 due to their heating.

The packs 2 of scrap, in output from the preheating furnace 10, are picked up individually or in pairs or in multiples of pairs and are arranged, by means of adapted devices of a known type, termed furnace extraction machines, on adapted conveyance means that are conveniently thermally insulated and transfer the preheated packs 2 of scrap to means for introducing the preheated packs 2 of scrap in the electric smelting furnace 30.

It is possible to use a moving belt in a closed loop, a moving catenary in a closed loop or a mechanical arm as conveyance means, complete with movable hoods which can be opened automatically, are removable, thermally insulated and passive. These are conveyance means of a known type, which are not described in detail for the sake of simplicity. These conveyance means are conveniently made of thermal steel, are insensitive to thermal shock and, if necessary, can be cooled with a mixture of air and atomized water and can be extended both horizontally and upward, making it possible, in this simplified assessment, which is not binding and to which the person skilled in the art can apply the appropriate variations, to convey the preheated packs 2 of scrap to the means for introducing them into the electric smelting furnace 30.

The means for introducing into the electric smelting furnace 30 the preheated packs 2 of scrap can be constituted by an unloading system of the tilting and/or sliding and/or vibrating type which introduces the preheated packs 2 of scrap into the electric smelting furnace 30 in a timed manner, i.e., introduces into the electric smelting furnace 30 a preset quantity of preheated packs 2 of scrap at preset time intervals.

These means for introducing into the electric smelting furnace 30 the preheated packs 2 of scrap comprise a movable door 41 with controlled opening, which is arranged so as to close an opening 33 that is formed in the side walls of the vat 32 of the electric smelting furnace 30 and a timed unloading device 40, which is arranged outside the electric smelting furnace 30 at said door 33. The timed unloading device 40 is adapted to convey the preheated packs 2 of scrap that originate from the conveyance means toward the door 33.

The opening 33 at which the movable door 41 is installed is preferably arranged below the fourth hole of the electric smelting furnace 30, between the phases termed No. 1 and No. 3 if a three-phase electric furnace is used as the electric smelting furnace.

The movable door 41 performs the functions of allowing loading of the packs 2 of scrap into the electric smelting furnace 30 in a semi-continuous manner, or rather a timed manner, as already mentioned, and drastic reduction of the inflow of cold air when the preheated packs 2 of scrap are not in transit.

By way of non-limiting example, the movable door 41 can be of the blade type, pivoted or free and even able to close again by gravity, is normally closed and opens exclusively for the passage of each pack 2 of preheated scrap.

The opening of the movable door 41 vertically or by rotation or with another motion is obtained preferably by the thrust force of the pack 2 in transit or, in case of emergency, by servo-actuated devices arranged at a distance.

Said movable door 41 is conveniently made of steel, is protected against the impacts of the packs 2 of scrap by means of appropriate ridges, can be contoured in order to adapt to the curvature of the lateral walls of the electric smelting furnace 30, also acts partially as a door (not sealed), is preferably cooled discontinuously with a mixture of air and atomized water, is provided with a double interspace, partially cooled by the cold air in transit, is insensitive to thermal shock, is provided with a laminar structure or with composite tubes that are conveniently spaced and is normally closed.

The timed unloading device 40, in the embodiment shown, which is to be understood as a non-limiting example, comprises a table 42 that is inclined upwards from below, with an inclination comprised by way of indication between 2° and 45° in the direction of the door 41. This table 42 can taper gradually in the direction of the door 41 and can also be shaped appropriately in order to position in an optimum manner the preheated packs 2 of scrap to be introduced into the electric smelting furnace 30. At the end of the table 42 there is a sliding panel 45. The table 42 can be actuated, on command, with a vibrating and/or sliding and/or tilting motion so as to be able to achieve assuredly the individual advancement of a pack 2 of preheated scrap against the door 41, which, as mentioned earlier, is preferably provided so as to open due to the thrust applied by the incoming pack 2 of preheated scrap.

The timed unloading device 40 comprises, upstream of the table 42 along the advancement direction of the preheated packs 2 of scrap toward the electric smelting furnace 30, a standby platform 43 and a pusher 44 that is actuated to cause the sequential passage of a pack of preheated scrap 2 from the standby platform 43 to the table 42.

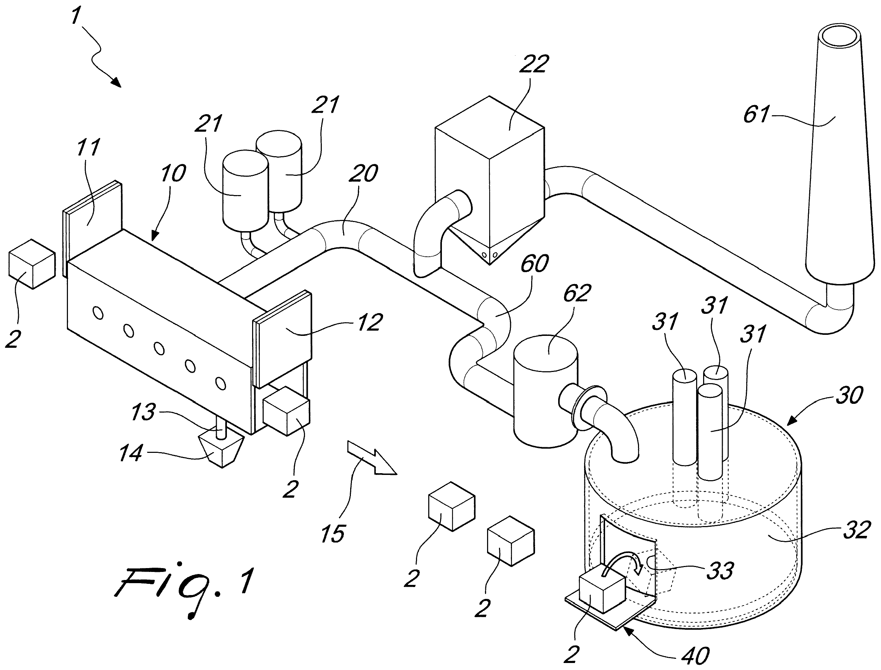

For the sake of completeness in description, it should be noted that the walls of the electric smelting furnace 30 are conveniently lined with refractory and that the level of the bath of liquid metal 50 within the electric smelting furnace 30 lies below the lower edge of the opening 33 that is closed by the movable door 41. Again for the sake of completeness in description, in Figure 1, to complete the electric smelting furnace 30, the electrodes 31, the exhaust gas evacuation duct 60 on which an exhaust gas cooling device 62 is arranged, and the stack 61 have been shown. The last portion of the exhaust gas evacuation duct 60 of the electric smelting furnace 30 is shared with the one of the preheating furnace 10, but the two furnaces can have independent exhaust gas evacuation ducts.

The timed unloading device 40 can be arranged on board the electric smelting furnace 30 and thus be integral with the vat 32 of the furnace 30 or can be positioned on the casting surface and therefore be independent of the electric smelting furnace 30.

In this last case, the structure of the electric smelting furnace 30 remains free and independent of the timed unloading device 40 and can therefore perform all the essential movements, such as the movements for deslagging and tapping, without the need for substantial modifications to the usual systems for the movement of the electric smelting furnace 30 (tilting).

In particular, the timed unloading device 40, as a consequence of its relatively small size, can be rested on a track or on a movable ledge that allows moving it away upon tapping. Furthermore, thanks to the fact that the times discharge device 40 is independent of the electric smelting furnace 30, during the loading of the preheated packs 2 of scrap the electric smelting furnace 30 can be partially tilted by a few degrees in order to perform deslagging operations.

The method and rate of introduction of each preheated pack 2 of scrap within the electric smelting furnace 30, which should not be understood as constraining and to which a person skilled in the art can provide appropriate variations, can be described in simplified form herein as given hereafter:
1. a preheated pack 2 of scrap is pushed onto the table 42;
2. the table 42, which initially does not vibrate, performs a first rotary motion to tilt the preheated pack 2 of scrap toward the adapted opening 33 formed in the lateral surface of the vat 32 of the electric smelting furnace 30;
3. while this tilting is in progress, the table 42 begins to vibrate;
4. this vibration causes the sliding of the preheated pack 2 of scrap along the generatrices of said table 42;
5. the movement of the preheated pack 2 of scrap is confined by the shape (cylindrical-conical/self-centering) of the table 42;
6. the preheated pack 2 of scrap pushes the door 41, lifting it and passing below it;
7. the table 42, having reached the maximum inclination, returns to the idle position, ready to receive the next pack 2 of preheated scrap.

The time for performing this working cycle can be approximately 20 seconds. The table 42 can be actuated by an electromechanical device arranged at a distance and said device, as well as the table 42, can be provided according to the known water cooling method.

As an electric smelting furnace 30 it is possible to use a traditional electric arc furnace of the UHP type, either of the direct-current type (single or multiple electrodes) or of the three-phase alternating-current type.

The main modification required to apply the method according to the invention consists in providing the vat 32 of the furnace 30 with an additional door 41, provided in a suitable position, in order to allow the timed loading of the packs 2 of preheated scrap within the vat 32 of the furnace 30.

The pack 2 of preheated scrap falls into the electric smelting furnace 30, becoming immersed in an adapted amount of the steel, known as "liquid heel", previously liquefied, while at the same time the electric power needed for the smelting and superheating of the steel continues to be introduced into the electric smelting furnace 30. It should be noted that the electric power is dispensed in a substantially constant manner, without peaks linked to the operating step, and is conveniently proportionate to the loading rate and to the weight of the preheated packs 2 of scrap of the load.

Simultaneously, the oxygen required for decarburization is dispensed by means of lances (supersonic or subsonic), without applying substantial modifications with respect to a traditional decarburization process.

With the application of the method according to the invention, since the packs 2 of scrap are introduced into the electric smelting furnace 30 already at a temperature that is higher than, or equal to, 1050°C, the energy required to complete melting is much lower than required by a load of cold scrap.

As shown by the specific literature ("Kinetics of Scrap Melting in Liquid Steel: Multipiece Scrap Melting" J. Li, N. Provatas - Metallurgical and Materials Transactions B - Volume 39, No. 2 (2008), 268-279), the transfer of energy from the bath of liquid metal to the scrap depends on the apparent porosity of the scrap, understood as a percentage ratio between the volume available in the pack and the volume occupied by the pieces of scrap. In the case described by way of example in the present invention, with an apparent density attributed to a pack 2 of scrap that weighs 3.0 t equal to 2.5 t/m³, one has an apparent porosity of approximately 73%. In accordance with this literature, when the porosity is comprised between 70% and 85%, one has a minimal forming of so-called icebergs, since the liquid steel can transmit its enthalpy to the scrap without thereby solidifying internally. The high temperature of the packs 2 of superheated scrap (higher than or equal to 1050°C), again in accordance with said specific literature, also allows reducing to one third the smelting time with respect to scrap loaded at an average temperature of 300°C as in other solutions that are the subject of previous patents.

Essentially, the method according to the invention divides the process for preheating the scrap and the corresponding smelting into two steps that are performed in parallel and with devices that are optimized for the specificity of each step. In particular, in the scrap pack preheating furnace there is high efficiency in energy transfer and a time of exposure to the hot gases that is not limited, while in the smelting step in the electric furnace efficiency is insured by the convection of the superheated liquid steel and is accelerated by the reduced amount of heat needed to bring the massive scrap from the temperature of 1050°C to the melting point (1530°C).

With reference to the non-limiting example of the method described above according to the present invention, the smelting time calculated for each pack 2 of scrap weighing 3 t with a preheating temperature higher than or equal to 1050°C in a bath of liquid metal at a temperature of 1060°C is approximately 20 seconds.

Again with reference to the example, given above in a non-limiting way, of the method according to the invention, it is noted that the total theoretical energy (electrical + chemical) to be made available for each pack 2 of preheated scrap in order to raise the bath to 1600°C is approximately 163 kWh/t.

It should be noted furthermore that the smelting of the preheated packs 2 of scrap according to the present invention reduces significantly the voltage variations and therefore the instability of the electric arc, reducing considerably the noise produced during the smelting process.

The preheating furnace 10, the electric smelting furnace 30 and all the auxiliary devices already referred to in this exemplifying description, which is not binding and to which a person skilled in the art can apply the appropriate variations, allow respectively loading/unloading of the preheating furnace 10 and introduction of a scrap pack 2 into the electric smelting furnace 30 approximately every 30 seconds. This leads, as a result, to a gross production potential comprised within the range between 120 t/h (with each pack weighing approximately 1.0 t) and 360 t/h (with an individual pack weighing 3.0 t).

In this example, the production potential, when the power-off times of the electric smelting furnace 30 are deduced, becomes respectively greater than or equal to 95 t/h (with each pack 2 weighing approximately 1.0 t) or greater than or equal to 285 t/h (with each pack 2 weighing approximately 3.0 t).

In practice it has been found that the method according to the invention and the apparatus for performing it fully achieve the intended aim and objects, since they make it possible to achieve considerable energy savings in the production of steel with electric smelting furnaces using steel scrap as raw material and ensure full compliance with the statutory provisions for environmental protection without requiring onerous additional equipment for exhaust gas treatment.

For these reasons, the method according to the invention is particularly aimed at steelworks that operate with 100% scrap as raw material and can be applied especially to apparatuses that exist in already-developed countries where, incidentally, the scrap is produced also. This allows restoring good degree of competitiveness to this type of steelworks.

Another advantage of the method according to the invention is the increase in productivity that arises from the fact that the preheating of the packs of scrap and the smelting of the packs of scrap introduced into the electric smelting furnace constitute two parallel process steps.

A further advantage of the method according to the invention is the substantial difference in the quality of the exhaust gases that arrive from the two furnaces, which allows a better utilization of the residual heat energy. More particularly, a large mass of relatively clean gas, containing a high enthalpy at temperatures that are much lower (200-300°C) than the mass that arrives from the electric smelting furnace (over 1000°C) and also provided with high stability in terms of both flow and temperature, arrives from the preheating furnace. This allows a much easier recovery of said heat content both for centralized heating and for cooling.

Another advantage of the method according to the invention resides in the fact that the electric power absorption of the electric smelting furnace is stable and with low absorption peaks and therefore is much more compatible with the use of electric power generated from renewable sources.

Finally, as an additional advantage, since it is possible to control the composition of the atmosphere of the preheating furnace, the method according to the invention can be applied also to stainless or high-alloy scrap.

The method thus conceived is susceptible of numerous modifications and variations, all of which are nevertheless within the scope of the accompanying Z claims.

In practice, the materials used, as long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for preparing and feeding metal scrap to an electric smelting furnace for making steel, comprising:
- a step of preparing the scrap in packs (2), in said step of preparing the scrap in packs (2), the scrap is compacted into packs (2) having a density comprised substantially between 1.5 t/m³ and 4.0 t/m³;
- a step of preheating the packs (2) of scrap in a preheating furnace (10) that is distinct from an electric smelting furnace (30) by said preheating furnace (10) being physically distinct and managed separately with respect to said electric smelting furnace (30);
- a step of extracting the preheated scrap packs (2) from said preheating furnace (10) and conveying them toward the electric smelting furnace (30);
- a step of introducing the packs (2) of preheated scrap into the liquid metal bath (50) of said electric smelting furnace (30).

2. The method according to claim 1, **characterized in that** in said step of preheating the packs (2) of scrap in the preheating furnace (10), the packs (2) of scrap are heated to a temperature above 1000°C.

3. The method according to claims 1 and 2, **characterized in that** in said step of preheating the packs (2) of scrap in the preheating furnace (10), the packs (2) of scrap are heated to a temperature that is higher than or equal to 1050°C.

4. The method according to one or more of the preceding claims, **characterized in that** in said step of preparing the scrap in packs (2) the scrap is compacted into packs (2) having a prism-like shape.

5. The method according to one or more of the preceding claims, **characterized in that** in said step of preparing the scrap in packs (2) the scrap is compacted into packs (2) having a cubic shape with a side comprised substantially between 0.6 m and 1.2 m.

6. The method according to one or more of the preceding claims, **characterized in that** in said step of preheating the packs (2) of scrap in the preheating furnace (10), the packs (2) of scrap are introduced into the preheating furnace (10) so as to be mutually spaced and are struck with a stream of hot gas on all of their sides.

7. The method according to one or more of the preceding claims, **characterized in that** in said preheating furnace (10) the preheating of the packs (2) of scrap is performed by striking the packs (2) of scrap with a hot gas that is constituted by the combustion gas produced by heat recovery burners or regenerative burners of said preheating furnace (10).

8. The method according to one or more of the preceding claims, **characterized in that** said step of introducing the packs (2) of preheated scrap into the bath of liquid metal (50) of the electric smelting furnace (30) is performed in a timed manner.

## Patentansprüche

1. Ein Verfahren zur Herstellung und Zuführung von Metallschrott, an einen elektrischen Schmelzofen zur Herstellung von Stahl, das Folgendes umfasst:
- einen Schritt zur Herstellung des Schrotts in Paketen (2), in dem Schritt der Herstellung des Schrotts in Paketen (2), wird der Schrott zu Paketen (2) verdichtet, die eine Dichte haben, welche im Wesentlichen zwischen 1,5 t/m³ und 4,0 t/m³ umfasst ist;
- einen Schritt des Vorerhitzens der Pakete (2) von Schrott, in einem Vorerhitzungsofen (10), der sich dadurch von einem elektrischen Schmelzofen (30) unterscheidet, dass der Vorerhitzungsofen (10) von dem elektrischen Schmelzofen (30) physisch separat und getrennt von ihm verwaltet ist;
- einen Schritt des Herausziehens der vorerhitzten Schrottpakete (2) aus dem Vorerhitzungsofen (10) und des Beförderns derselben zum elektrischen Schmelzofen (30);
- einen Schritt des Hineingebens der Pakete (2) von vorerhitztem Schrott, in das Flüssigmetallbad (50) des elektrischen Schmelzofens (30).

2. Das Verfahren gemäß Anspruch 1, **dadurch gekennzeichnet, dass** in dem Schritt des Vorerhitzens der Pakete (2) von Schrott, in dem Vorerhitzungsofen (10) die Pakete (2) von Schrott auf eine Temperatur oberhalb 1000°C erhitzt werden.

3. Das Verfahren gemäß den Ansprüchen 1 und 2, **dadurch gekennzeichnet, dass** in dem Schritt des Vorerhitzens der Pakete (2) von Schrott in dem Vorerhitzungsofen (10) die Pakete (2) von Schrott auf eine Temperatur erhitzt werden die mindestens 1050°C beträgt.

4. Das Verfahren gemäß einem oder mehreren der obigen Ansprüche, **dadurch gekennzeichnet, dass** in dem Schritt des Herstellens des Schrotts in Paketen (2) der Schrott zu Paketen (2) verdichtet wird, die eine prismaartige Form haben.

5. Das Verfahren gemäß einem oder mehreren der obigen Ansprüche, **dadurch gekennzeichnet, dass** der Schritt des Herstellens des Schrotts in Paketen (2) der Schrott zu Paketen (2) verdichtet wird, die eine Würfelform haben, wobei eine Seite im Wesentlichen zwischen 0,6 m und 1,2 m umfasst ist.

6. Das Verfahren gemäß einem oder mehreren der obigen Ansprüche, **dadurch gekennzeichnet, dass** in dem Schritt des Vorerhitzens der Pakete (2) von Schrott im Vorerhitzungsofen (10) die Pakete (2) von Schrott so in den Vorerhitzungsofen (10) gegeben werden, dass sie voneinander beabstandet sind und auf alle ihre Seiten ein Strom von Heißgas auftrifft.

7. Das Verfahren gemäß einem oder mehreren der obigen Ansprüche, **dadurch gekennzeichnet, dass** in dem Vorerhitzungsofen (10) das Vorerhitzen der Pakete (2) von Schrott durchgeführt wird, indem auf die Pakete (2) von Schrott ein Heißgas auftrifft, dass aus dem Verbrennungsgas besteht, das von Wärmerückgewinnungsbrennern oder Regenerativbrennern des Vorerhitzungsofens (10) erzeugt wird.

8. Das Verfahren gemäß einem oder mehreren der obigen Ansprüche, **dadurch gekennzeichnet, dass** der Schritt des Hineingebens der Pakete (2) von vorerhitztem Schrott in das Flüssigmetallbad (50) des elektrischen Schmelzofens (30) zeitgetacktet durchgeführt wird.

## Revendications

1. Procédé de préparation et d'alimentation de ferraille dans un four de fusion électrique pour la production d'acier, comprenant :
- une étape de préparation de la ferraille en cubes (2), dans ladite étape de préparation de la ferraille en cubes (2), la ferraille est compactée en cubes (2) ayant une masse volumique comprise substantiellement entre 1,5 t/m³ et 4,0 t/m³ ;
- une étape de préchauffage des cubes (2) de ferraille dans un four de préchauffage (10) qui est distinct d'un four de fusion électrique (30), ledit four de préchauffage (10) étant physiquement distinct et géré séparément par rapport audit four de fusion électrique (30) ;
- une étape d'extraction des cubes de ferraille préchauffés (2) dudit four de préchauffage (10) et de transport de ces derniers vers le four de fusion électrique (30) ;
- une étape d'introduction des cubes (2) de ferraille préchauffée dans le bain de métal liquide (50) dudit four de fusion électrique (30).

2. Procédé selon la revendication 1, **caractérisé en ce que** dans ladite étape de préchauffage des cubes (2) de ferraille dans le four de préchauffage (10), les cubes (2) de ferraille sont chauffés à une température supérieure à 1000 °C.

3. Procédé selon les revendications 1 et 2, **caractérisé en ce que** dans ladite étape de préchauffage des cubes (2) de ferraille dans le four de préchauffage (10), les cubes (2) de ferraille sont chauffés à une température qui est supérieure ou égale à 1050 °C.

4. Procédé selon l'une ou plusieurs des revendications précédentes, **caractérisé en ce que**, dans ladite étape de préparation de la ferraille en cubes (2), la ferraille est compactée en cubes (2) ayant une forme de prisme.

5. Procédé selon l'une ou plusieurs des revendications précédentes, **caractérisé en ce que**, dans ladite étape de préparation de la ferraille en cubes (2), la ferraille est compactée en cubes (2) de forme cubique de côté substantiellement compris entre 0,6 m et 1,2 m.

6. Procédé selon l'une ou plusieurs des revendications précédentes, **caractérisé en ce que** dans ladite étape de préchauffage des cubes (2) de ferraille dans le four de préchauffage (10), les cubes (2) de ferraille sont introduits dans le four de préchauffage (10) de manière à être mutuellement espacés et sont frappés par un courant de gaz chaud sur toutes leurs faces.

7. Procédé selon l'une ou plusieurs des revendications précédentes, **caractérisé en ce que**, dans ledit four de préchauffage (10), le préchauffage des cubes (2) de ferraille est réalisé en dirigeant sur les cubes (2) de ferraille un gaz chaud qui est constitué par le gaz de combustion produit par des brûleurs à récupération de chaleur ou des brûleurs régénératifs dudit four de préchauffage (10).

8. Procédé selon l'une ou plusieurs des revendications précédentes, **caractérisé en ce que** ladite étape d'introduction des cubes (2) de ferraille préchauffée dans le bain de métal liquide (50) du four de fusion électrique (30) est exécutée de façon temporisée.
